# EUROPÄISCHE PATENTSCHRIFT

(11) **EP 2 264 295 B1**
(45) Veröffentlichungstag und Bekanntmachung des Hinweises auf die Patenterteilung: **14.12.2011**
(21) Anmeldenummer: 09163282.8
(22) Anmeldetag: 19.06.2009
(51) Int. Cl.: F02B 63/04, F16M 3/00

(54) **Stromaggregat**
Electrical generator
Agrégat de courant

(43) Veröffentlichungstag der Anmeldung: 22.12.2010
(73) Patentinhaber: Matrix GmbH, 84109 Wörth/lsar (DE)
(72) Erfinder: Bindhammer, Markus, 201108, Shanghai (CN)
(74) Vertreter: Benninger, Johannes

(56) Entgegenhaltungen:
- US-A1- 2003 184 094
- US-A1- 2004 168 654
- US-A1- 2005 252 459
- US-A1- 2008 054 858

## Beschreibung

Die vorliegende Erfindung betrifft ein Stromaggregat mit einem Tragrahmen, an dem ein Generator, ein den Generator antreibender Verbrennungsmotor und ein Tank mit Brennstoff gehalten sind.

Aus dem Stand der Technik sind bereits Stromaggregate bekannt, die in der Regel zur standortunabhängigen Erzeugung von elektrischer Energie dienen. Es gibt diese Stromaggregate in den unterschiedlichsten Baugrößen. Zum Erzeugen von elektrischer Energie besitzen diese einen Generator, der über einen Verbrennungsmotor angetrieben wird. Der Verbrennungsmotor muss mit Kraftstoff versorgt werden. Der Kraftstoff wird vor der Zuführung in entsprechenden Tankvorrichtungen gespeichert. Die Tankvorrichtungen sind bei kleineren und/oder tragbaren Stromaggregaten zumeist oberhalb des Motors angeordnet. Weiter offenbart der Stand der Technik Traggestelle, innerhalb derer die entsprechenden Komponenten von Stromaggregaten angeordnet werden können.

Ein mobiles Stromaggregat ist beispielsweise aus der DE 20 2005 007 928 U1 bekannt. Der Generator und der Verbrennungsmotor sind in einem Gehäuse fest eingebaut. Bei Wartungsarbeiten muss das Gehäuse durch Lösen von Verbindungen geöffnet werden. Damit geht ein zusätzlicher zeitlicher Aufwand einher.

Ein weiteres Stromaggregat ist aus der DE 42 01 077 A1 bekannt. Hierbei ist der Verbrennungsmotor an einen Generator mechanisch gekoppelt. Um Gehäuseteile einzusparen, ist der Kraftstofftank in die Oberfläche des Gehäuses integriert. Die Fixierung des Kraftstofftanks erfolgt mittels Schrauben. Um auf wartungsbedürftige Teile zugreifen zu können, ist eine Klappe im Gehäuse vorhanden. In der Praxis kann es jedoch nötig sein, auf den kompletten Motor oder auf den kompletten Generator zugreifen zu müssen um notwendige Reparaturarbeiten durchzuführen.

Die US 2008/054858 A1 beschreibt ein kompaktes fahrbares Stromaggregat, dessen Kraftstofftank so geformt ist, dass er den oberhalb einer Einheit aus Antriebsmotor und Generator befindlichen Raum in optimierter Weise ausschöpft. Während der Tank an der Oberseite flach ist, ist er an der Unterseite konturiert. Der Tank ist in einem Rahmen des Aggregats mittels eines umlaufenden Gummielements gelagert, womit er von Schwingungen entkoppelt ist.

Die vorrangige Aufgabe der Erfindung besteht darin, ein Stromaggregat zur Verfügung zu stellen, bei dem im Rahmen von Wartungsarbeiten einfach und schnell auf den Verbrennungsmotor und/oder den Generator zugegriffen werden kann.

Die obige Aufgabe wird durch ein Stromaggregat gelöst, das die Merkmale des unabhängigen Anspruchs 1 umfasst. Merkmale vorteilhafter Weiterbildungen der Erfindung ergeben sich aus den abhängigen Ansprüchen.

Das erfindungsgemäße Stromaggregat weist einen Tragrahmen auf, an dem ein Generator, ein Verbrennungsmotor und ein Tank gehalten sind. Der Generator kann ein elektrischer Generator, wie beispielsweise ein Lineargenerator oder ein Drehgenerator sein. Der Verbrennungsmotor kann beispielsweise als Benzinmotor oder Dieselmotor ausgebildet sein. Der Verbrennungsmotor ist dabei vorzugsweise direkt mit dem Generator gekoppelt, bspw. über eine starre Welle. Hinsichtlich des Tanks können unterschiedliche geometrische Gestaltungsmöglichkeiten gewählt werden. Beispielsweise können eckige, runde oder Kombinationen von geometrischen Formen zur Ausgestaltung der Wände des Tanks gewählt werden. Die Tankwände umschließen einen Hohlraum, der zur Speicherung des Kraftstoffes dient. Weiter beinhaltet mindestens eine Tankwand mindestens eine Öffnung zur Zuführung des Kraftstoffes in den von den Wänden umschlossenen Hohlraum, üblicherweise an der Oberseite des Tanks. Zudem beinhaltet mindestens eine Tankwand mindestens eine weitere Öffnung zur Weitergabe des Kraftstoffes an den Verbrennungsmotor, normalerweise an der tiefsten Stelle an der Unterseite des Tanks. Die Weitergabe des Kraftstoffes an den Verbrennungsmotor kann mittels Zwischenverbindungen wie beispielsweise Schlauchverbindungen oder Pumpverbindungen erfolgen.

Der Generator und/oder der Verbrennungsmotor können beispielsweise über Schraubverbindungen am Tragrahmen gehalten sein. Weiter sind feste Verbindungen zwischen Tragrahmen und Verbrennungsmotor und/oder Generator, wie beispielsweise Schweiss-, Klebe-, Schnappverbindungen oder andere Schnellverschlussverbindungen möglich.

Der Tank ist gemäß der Erfindung schwenkbar mit dem Tragrahmen verbunden. Die schwenkbare Verbindung kann zahlreichen Gestaltungsvariationen unterliegen. Beispielsweise können die Verbindungen über Drehgelenke ausgebildet sein. Weiter kann der Tank beispielsweise eine rohrartig ausgebildete Verbindungsstange aufweisen. Zudem kann der Tragrahmen mit Verbindungsbolzen versehen sein, die in die Verbindungsstange greifen, so dass eine Schwenkbewegung des Tanks ermöglicht wird. Die schwenkbare Verbindung zwischen Tragrahmen und Tank ist vorzugsweise derart ausgebildet, dass ein Verschwenken des Tanks um eine horizontal angeordnete Achse erfolgen kann. Weiter ist die schwenkbare Verbindung derart ausgebildet, dass nach einer Schwenkbewegung des Tanks der Verbrennungsmotor und der Generator zumindest teilweise zugänglich sind. Durch diese erfindungsgemäße Ausgestaltung kann im Fall von Servicearbeiten leicht auf den Motor und den Generator zugegriffen werden. Zusätzlich kann eine Abstützung für den Tank in der angehobenen Lage sowie vorzugsweise eine Verriegelung in der abgesenkten Betriebslage vorgesehen sein. Die Abstützung kann bspw. durch eine ausklappbare Stützstange oder durch eine geeignete Gelenkverriegelung oder auch durch einen Gasdruckdämpfer o. dgl. ausgebildet sein.

Zudem kann der Tank abnehmbar mit dem Tragrahmen verbunden sein. Die Verbindung kann beispielsweise derart ausgebildet sein, dass eine lösbare Rast-oder Klemm- oder Schnappverbindungen zwischen Tank und Tragrahmen hergestellt und gelöst werden kann. Auch sind Ausführungsvarianten vorstellbar, bei denen der Tank mittels Schraubverbindungen oder ähnlichen Verbindungselementen am Tragrahmen fixiert wird. Die lösbare Verbindung zwischen Tank und Tragrahmen hat unter anderem den Vorteil, dass der Tank als Kanister zum Transport von flüssigen Medien genutzt werden kann. Hierdurch kann der Tank beispielsweise nach Abnahme vom Stromaggregat direkt an einer Tankstelle mit Kraftstoff befüllt werden. Auf einen umständlichen Umfüllvorgang zwischen Benzinkanister und Tank kann im Rahmen dieser Ausführungsvariante verzichtet werden.

Im Rahmen der Erfindung kann eine Brennstoffleitung vorgesehen sein, durch die eine Verbindung zwischen dem Tank und dem Verbrennungsmotor hergestellt werden kann, um Kraftstoff vom Tank an den Verbrennungsmotor weiterzuleiten. Hierbei können an einem oder an beiden Enden oder auch im Verlauf der Brennstoffleitung Schnellkupplungssysteme vorhanden sein, um den Tank und/oder die Brennstoffleitung unkompliziert und mit geringem zeitlichen Aufwand lösen zu können. Gebräuchliche Schnellkupplungssysteme, die bei Öffnung eine zuverlässige Abdichtung aufweisen, sind dem Fachmann bekannt, so dass auf die Ausgestaltung der Schnellkupplung an dieser Stelle nicht näher eingegangen werden muss.

Ein mögliches Material zur Ausgestaltung des Tanks ist Kunststoff. Für den Kunststoff können beispielsweise Thermoplaste, Duroplaste oder Elastomere verwendet werden. Ebenso können am Tragrahmen Seitenwände vorhanden sein, die aus demselben Material wie der Kunststofftank gebildet sein können. Selbstverständlich kann der Tank auch aus Metall, bspw. aus Stahlblech oder aus einem Leichtmetall gefertigt sein. Bei Kunststofftanks kommen ebenfalls verschiedene Materialien in Frage, die ausreichend beständig gegen den Kraftstoff sein müssen und vorzugsweise eine geringe Diffusionsrate aufweisen sollten.

Befindet sich das Stromaggregat in Betrieb, so kann der Tank in einer nicht geschwenkten Grundstellung bzw. Betriebsstellung angeordnet sein. Hierbei liegt der Tank beispielsweise auf Teilen des Tragrahmens auf und ist vorzugsweise zusätzlich verriegelt. Hierbei kann er mit den Seitenwänden einen homogenen Gehäusekörper bilden. Der Gehäusekörper kann derart ausgebildet sein, dass er den Motor und den Generator zumindest teilweise umgibt. Dies hat insbesondere eine Reduktion des Geräuschpegels sowie eine erhöhte Sicherheit des Benutzers zum Vorteil. Auch kann die Abdeckung die Einzelteile des Aggregats vor Verschmutzung und Staubbelastung schützen.

Um den Geräuschpegel des Stromaggregats weiter zu reduzieren, ist im Rahmen einer Ausführungsform der vorliegenden Erfindung ein Schalldämpfer für den Verbrennungsmotor vorgesehen. Der Schalldämpfer kann im vorderen Bereich des Stromaggregates angeordnet sein. Durch diese Anordnungsmöglichkeit wird eine höhere Sicherheit des Benutzers gewährleistet, da somit der Verbrennungsmotor zusätzlich im vorderen Bereich des Stromaggregats vor unbeabsichtigten Kontakt durch den Benutzer abgeschirmt wird. Wenn in diesem Zusammenhang von einem vorderen Bereich des Stromaggregats gesprochen wird, so kann damit vorzugsweise ein Bereich unterhalb eines Schwenkscharniers für den Tank und/oder ein motornaher Bereich, d.h. ein dem Generator abgewandter Bereich des Aggregats gemeint sein.

Zur zusätzlichen Schalldämmung kann es darüber hinaus von Vorteil sein, wenn die Abdeckungen an ihren Innenseiten Schall schluckende Beschichtungen, bspw. aus Schaumstoff o. dgl. aufweisen. Auch kann es vorteilhaft sein, die gesamte Einheit aus Motor und Generator schwingungsgedämpft im Tragrahmen zu lagern, so dass weniger Körperschallanteile auf diesen und damit auf die Außenwände des Aggragats übertragen werden. Eine zusätzliche schwingungsgedämpfte oder schwingungsentkoppelte Lagerung des Tanks kann einerseits dessen Körperschallschwingungen und damit dessen Luftschallanregungstendenzen reduzieren. Darüber hinaus sorgt eine solche Lagerung dafür, dass der Brennstoff nicht zu Schwingungen angeregt wird und ruhig, d.h. mit weniger Druckstößen durch die Leitungen befördert werden kann.

Im unteren Bereich des Tragrahmens können mindestens zwei Fahrrollen angeordnet sein. Diese dienen zum leichteren Bewegen des Stromaggregates. Die Fahrrollen können beispielsweise aus Kunststoff gefertigt sein.

Auch kann am Tragrahmen ein Griff vorhanden sein. Der Griff kann derart am Tragrahmen angebracht werden, dass er um eine horizontal angeordnete Achse geschwenkt werden kann und die Schwenkbewegung in einem Winkel erfolgt, der größer als 0° ist und 180° nicht überschreitet. Hierdurch kann das Stromaggregat in einer kompakten Betriebsstellung über einen eingeklappten Griff verfügen. Weiter kann durch einen Rückschwenkvorgang der Griff in die Ausgangslage gebracht werden, so dass ein Bewegen des Stromaggregats durch den Benutzer unter Zuhilfenahme des Griffes erfolgen kann.

Der Griff kann vorzugsweise derart am Tragrahmen angeordnet sein, dass er um 90° geschwenkt werden kann. In dieser Ausführungsvariante können zudem Verbindungsmittel zwischen Griff und Tragrahmen vorhanden sein, durch die ein vorübergehendes Fixieren des Griffes in der Position 0° und/oder in der Position 90° gewährleistet werden kann. Weiter können diese Mittel derart ausgebildet sein, dass durch ein manuelles Einwirken auf die Mittel ein Lösen der Fixierung erfolgen kann, so dass ein Schwenken des Griffes ermöglicht wird.

Auch beinhaltet das Stromaggregat Anschlüsse oder Steckdosen zur Entnahme von Elektrizität. Diese können hinsichtlich ihrer Anzahl und ihrer Funktion variieren. Beispielsweise können mehrere Steckdosen mit unterschiedlicher oder gleicher Spannung vorhanden sein. Die Spannungen können beispielsweise 230V und/oder 400V betragen.

In einer Ausführungsform kann der Tragrahmen als Gestängekonstruktion ausgebildet sein. Dies hat gegenüber flächigen Ausführungsformen den Vorteil der Gewichtsreduktion. Allerdings sind auch Varianten des Tragrahmens denkbar, bei denen dieser aus Leichtmetall, gefertigt in einem Druckgussverfahren, vorzugsweise ein- oder mehrteilig, oder aus verripptem Kunststoff, gefertigt in einem Spritzgussverfahren, gefertigt sein kann.

Weiter kann im hinteren Bereich des Stromaggregates ein Abdeckblech zum Schutz des Benutzers und zur Geräuschreduktion vorhanden sein. Mit hinterem Bereich ist in diesem Zusammenhang eine Seite gemeint, die dem Abgasschalldämpfer gegenüber liegt.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt.
Fig. 1 zeigt eine Perspektivansicht einer Ausführungsform eines erfindungsgemäßen Stromaggregats mit nach oben geschwenktem Tank in einer Servicestellung.
Fig. 2 zeigt eine Perspektivansicht des Stromaggregats gemäß Fig. 1 von hinten und in einer Betriebslage.
Fig. 3 zeigt eine weitere Perspektivansicht des Stromaggregats gemäß Fig. 1 und Fig. 2 mit in einer Betriebsstellung befindlichem Tank.
Fig. 4 zeigt eine schematische Perspektivansicht einer Ausführungsform eines Tanks des Stromaggregats.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele da, wie die erfindungsgemäße Vorrichtung ausgestaltet sein kann und stellen keine abschließende Begrenzung dar.

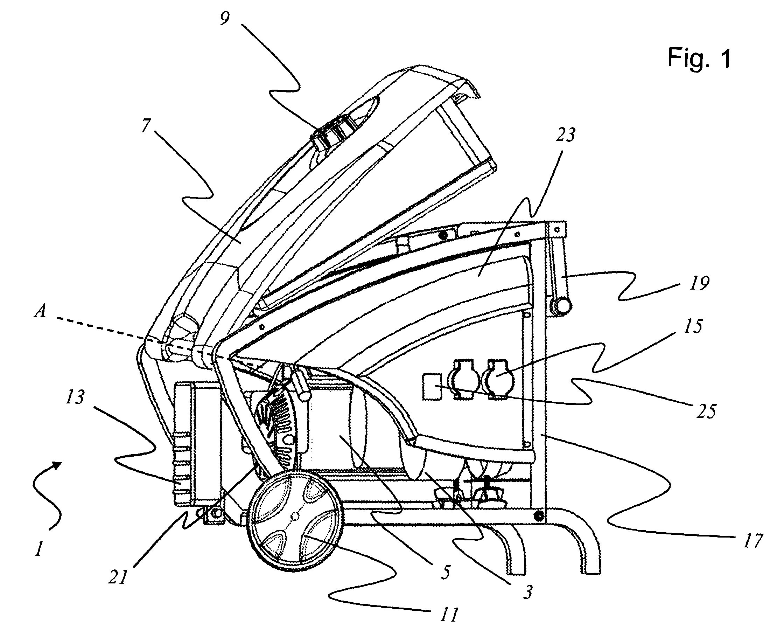

Die schematische Perspektivansicht der Fig. 1 zeigt eine Ausführungsform eines Stromaggregats 1, das einen nach oben geschwenkten Tank 7 aufweist, so dass eine Servicestellung gebildet ist.

Das Stromaggregat 1 umfasst einen Tragrahmen 17, an dem ein Verbrennungsmotor 5, ein Generator 3 und ein Tank 7 gehalten sind. Der Tragrahmen 17 ist vorliegend als Gestängekonstruktion ausgebildet. Eine Schwenkbewegung des Tanks 7 ist in Fig. 1 bereits erfolgt, so dass der Verbrennungsmotor 5 und der Generator 3 freigelegt sind. Die Schwenkbewegung erfolgt um die horizontale Achse A. Am Verbrennungsmotor 5 ist zudem eine Abdeckung 21 angeordnet. Zwischen der Abdeckung 21 und dem Verbrennungsmotor 5 kann ggf. ein Ventilator vorhanden sein, der zur Kühlung des Verbrennungsmotors 5 vorgesehen ist. Weiter steht der Verbrennungsmotor 5 zur Geräuschreduzierung mit einem Schalldämpfer 13 in Verbindung. Der Abgasschalldämpfer 13 ist im vorderen Bereich des Stromaggregates 1 angeordnet. Hierdurch wird die Sicherheit des Stromaggregats 1 hinsichtlich einer unbeabsichtigten Kontaktaufnahme zwischen Benutzer und Verbrennungsmotor 5 erhöht. Der Tank 7 beinhaltet eine Zuführöffnung für Kraftstoff. An der Zuführöffnung ist ein Tankdeckel 9 angeordnet, der zum Öffnen und Verschließen der Zuführöffnung dient. Im unteren Bereich des Tragrahmens 17 sind Fahrrollen 11 angeordnet. Weiter sind Steckdosen 15 vorhanden. Die Steckdosen 15 können in ihrer Anzahl und in ihrer Ausgestaltung variieren. Beispielsweise können mehrere Steckdosen 15 derart ausgebildet sein, dass alle Steckdosen 15 die gleiche Spannung zur Verfügung stellen. Auch Ausführungsbeispiele mit Steckdosen 15, bei denen eine oder mehrere Steckdosen unterschiedliche Spannungen zur Verfügung stellen, sind im Rahmen der Erfindung vorstellbar.

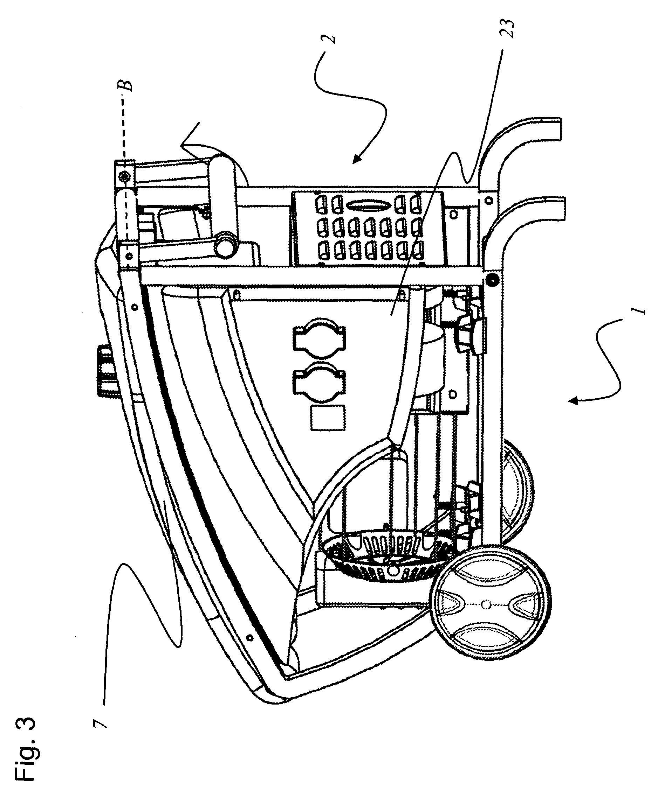

Weiter ist in der gezeigten Ausführungsform ein Griff 19 am Tragrahmen 17 angeordnet. Der Griff 19 ist derart ausgebildet, dass er um die in Fig. 3 gezeigte horizontal verlaufende Achse B in Pfeilrichtung geschwenkt werden kann. In den Darstellungen der Figuren 1 bis 3 befindet sich der Griff 19 in einer Betriebsstellung des Stromaggregats 1. Soll das Stromaggregat bewegt werden, so kann der Griff 19 geschwenkt werden. Der Winkel, um den geschwenkt wird, kann beispielsweise 90° betragen. Nach einem Schwenkvorgang um einen vordefinierten Winkel kann sich der Griff 19 in einer Fixposition befinden. Weiter können Verbindungsmittel zwischen Griff 19 und Tragrahmen 17 vorgesehen sein, die gelöst werden müssen, um den Griff 19 zurück in die Betriebsstellung zu überführen.

Auch sind am Tragrahmen 17 Seitenwände 23 aus Kunststoff angeordnet. Sie dienen zum Schutz des Benutzers, um eine unbeabsichtigte Kontaktaufnahme zum Verbrennungsmotor 5 und/oder zum Generator 3 zu unterbinden. Weiter dienen die Seitenwände 23 zur Geräuschreduktion des Stromaggregates 1.

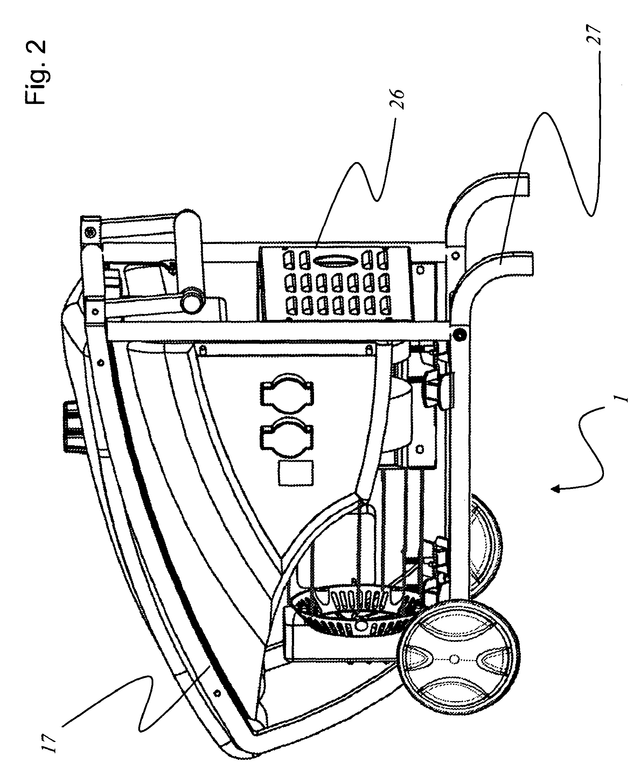

Die Darstellung der Fig. 2 zeigt eine Perspektivansicht des Stromaggregats 1 von hinten. Am Tragrahmen 17 ist ein Abdeckblech 26 angeordnet um unbeabsichtigten Kontakt des Benutzers mit dem Generator 3 zu unterbinden. Weiter sind Abstellbeine 27 zur Stabilisierung des Stromaggregates 1 während des Betriebes vorgesehen.

Die Perspektivansicht der Fig. 3 zeigt das Stromaggregat 1 mit Tank 7 in einer Betriebsstellung. Gegensätzlich zur Servicestellung des Tanks 7 entsprechend Fig. 1 ist in der in Fig. 3 gezeigten Ausführungsform keine Schwenkbewegung des Tanks 7 erfolgt. Der Tank 7 liegt gemäß Fig. 3 in einer Position, bei der sich das Stromaggregat 1 in Betrieb befinden kann. Der Tank 7 und die Seitenwände 23 bilden zusammen den homogenen Gehäusekörper 2. Zusätzlich kann es von Vorteil sein, den Tank 7 in der gezeigten Betriebslage mit dem Tragrahmen 17 in irgendeiner Weise zu verriegeln.

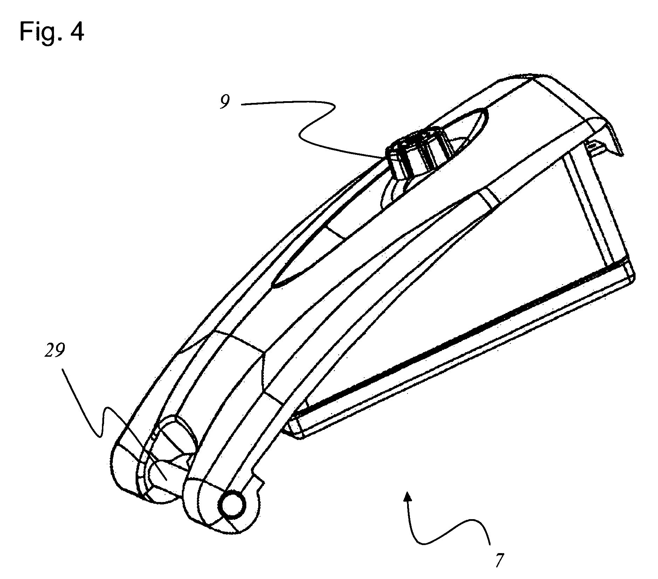

Die weitere Perspektivansicht der Fig. 4 zeigt den Tank 7 des Stromaggregats 1. Der Tank 7 weist eine Verbindungsstange 9 auf, durch die der Tank 7 über Bolzenverbindungen am Tragrahmen 17, wie in Fig. 1-3 gezeigt, angeordnet und schwenkbar gehalten werden kann. Weiter beinhaltet der Tank 7 eine Zuführöffnung für Kraftstoff. An der Zuführöffnung ist der Tankdeckel 9 angeordnet, der zum Öffnen und Verschließen der Zuführöffnung dient.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 1: Stromaggregat
- 2: Gehäusekörper
- 3: Generator
- 5: Verbrennungsmotor
- 7: Tank
- 9: Tankdeckel
- 11: Fahrrolle
- 13: Schalldämpfer
- 15: Steckdosen
- 17: Tragrahmen
- 19: Griff
- 21: Ventilator
- 23: Seitenwand
- 25: Schalter
- 26: Abdeckblech
- 27: Abstellbeine
- 29: Verbindungsstange
- A: Horizontal verlaufende Achse 1
- B: Horizontal verlaufende Achse 2

## Patentansprüche

1. Stromaggregat (1) mit einem Tragrahmen (17), an dem ein Generator (3), ein diesen antreibender Verbrennungsmotor (5) und ein Tank mit Brennstoff (7) gehalten sind, **dadurch gekennzeichnet, dass** der Tank (7) mit dem Tragrahmen (17) schwenkbar verbunden ist und die schwenkbare Verbindung derart ausgebildet ist, dass nach einer Schwenkbewegung des Tanks (7) der Verbrennungsmotor (5) und der Generator (3) zumindest teilweise zugänglich sind.

2. Stromaggregat nach Anspruch 1, bei dem der Tank (7) abnehmbar am Tragrahmen (17) gehalten ist.

3. Stromaggregat nach Anspruch 2, bei dem der abnehmbare Tank (7) und der Verbrennungsmotor (5) über eine Brennstoffleitung mit Schnellkupplungssystem verbunden sind.

4. Stromaggregat nach einem oder mehreren der vorhergehenden Ansprüche, mit einem Tank (7) aus Kunststoff.

5. Stromaggregat nach einem oder mehreren der vorhergehenden Ansprüche, bei dem am Tragrahmen (17) Seitenwände aus Kunststoff (23) vorhanden sind.

6. Stromaggregat nach Anspruch 5, bei dem in einer Betriebsstellung des Stromaggregates (1) ein weitgehend homogener Gehäusekörper (2) durch Tank (7) und Seitenwände (23) gebildet ist.

7. Stromaggregat nach Anspruch 6, bei dem der Gehäusekörper (2) den Verbrennungsmotor (5) und den Generator (3) zumindest teilweise umgibt.

8. Stromaggregat nach einem oder mehreren der vorhergehenden Ansprüche, bei dem zur Reduzierung des Geräuschpegels ein Schalldämpfer (13).für den Verbrennungsmotor (5) vorgesehen ist und der Schalldämpfer (13) im vorderen Bereich des Stromaggregates (1) und/oder in einem Bereich nahe eines oder unterhalb eines Schwenkbereichs des Tanks (7) angeordnet ist.

9. Stromaggregat nach einem oder mehreren der vorhergehenden Ansprüche, bei dem im unteren Bereich des Tragrahmens (17) mindestens zwei Fahrrollen (11) angeordnet sind.

10. Stromaggregat nach einem oder mehreren der vorhergehenden Ansprüche, bei dem am Tragrahmen (17) ein Griff (19) vorhanden ist.

11. Stromaggregat nach Anspruch 10, bei dem der Griff (19) derart mit dem Tragrahmen verbunden ist, dass er um eine horizontale Achse geschwenkt werden kann und die Schwenkbewegung in einem Winkel erfolgt, der größer als 0° ist und 180° nicht überschreitet.

12. Stromaggregat nach einem oder mehreren der vorhergehenden Ansprüche, bei dem der Tragrahmen als Gestängekonstruktion (17) ausgebildet ist.

13. Stromaggregat nach einem oder mehreren der vorhergehenden Ansprüche, bei dem im hinteren Bereich des Stromaggregats (1) bzw. in einem vom Schalldämpfer (13) abgewandten Bereich ein Abdeckblech (26) vorhanden ist.

## Claims

1. Power generator (1) with a support frame (17), whereby a generator (3), an internal combustion engine (5) powering said generator (3) and a tank (7) filled with fuel are arranged on the support frame (17), **characterized by** that the tank (7) is connected to the support frame (17) in a pivotable manner, and that the pivotable connection is designed in such a way that the combustion engine (5) and the generator (3) are at least partially accessible after a pivoting movement of the tank (7).

2. Power generator (1) according to claim 1, whereby the tank (7) is removable retained on the support frame (17).

3. Power generator (1) according to claim 2, whereby the removable tank (7) is connected to the internal combustion engine (5) via a fuel line with a quick-release coupling system.

4. Power generator (1) according to one or more of the preceding claims, whereby the tank (7) is made of plastic.

5. Power generator (1) according to one or more of the preceding claims, whereby support frame (17) has side walls made of plastic (23).

6. Power generator (1) according to claim 5, in which a largely homogenous housing body (2) is created by the tank (7) and the side walls (23) in an operating position of the power generator (1).

7. Power generator (1) according to claim 6, whereby the internal combustion engine (5) and the generator (3) are at least partially surrounded by the housing body (2).

8. Power generator (1) according to one or more of the preceding claims, whereby a sound absorber (13) is provided for noise reduction of the internal combustion engine (5) and whereby said sound absorb (13) is positioned in front of the power generator (1) and / or in an area close to or below the pivoting range of the tank (7).

9. Power generator (1) according to one or more of the preceding claims, whereby at least two driving wheels (11) are positioned in the lower part of the support frame (17).

10. Power generator (1) according to one or more of the preceding claims, whereby the support frame (17) comprises a handle (19).

11. Power generator (1) according to claim 10, whereby the handle (19) is connected to the support frame (17) in such a way that it can be pivoted about a horizontal axis whereby the pivotal movement is is carried out in an angle which is greater than 0° but that does not exceed 180°.

12. Power generator (1) according to one or more of the preceding claims, whereby to the support frame (17) is designed as a pole structure.

13. Power generator (1) according to one or more of the preceding claims, whereby a covering plate (26) is provided in the rear part of the power generator (1) and / or in a part averted from the sound absorber (13) respectively.

## Revendications

1. Groupe électrogène (1) avec un cadre porteur (17) sur lequel sont supportés un générateur (3), un moteur à combustion interne (5) qui entraîne ce dernier et un réservoir contenant du carburant (7), **caractérisé en ce que** le réservoir (7) est relié de manière pivotante au cadre porteur (17) et la liaison pivotante est formée de manière à ce que, après un mouvement pivotant du réservoir (7), le moteur à combustion interne (5) et le générateur (3) soient au moins partiellement accessibles.

2. Groupe électrogène selon la revendication 1, dans lequel le réservoir (7) est supporté de manière amovible sur le cadre porteur (17).

3. Groupe électrogène selon la revendication 2, dans lequel le réservoir amovible (7) et le moteur à combustion interne (5) sont reliés par l'intermédiaire d'une conduite de carburant à système d'accouplement rapide.

4. Groupe électrogène selon l'une quelconque ou plusieurs des revendications précédentes, avec un réservoir (7) en matière plastique.

5. Groupe électrogène selon l'une quelconque ou plusieurs des revendications précédentes, dans lequel des parois latérales en matière plastique (23) existent sur le cadre porteur (17).

6. Groupe électrogène selon la revendication 5, dans lequel, à une position de service du groupe électrogène (1), un corps de boîtier (2) en grande partie homogène est formé par le réservoir (7) et les parois latérales (23).

7. Groupe électrogène selon la revendication 6, dans lequel le boîtier (2) entoure au moins partiellement le moteur à combustion interne (5) et le générateur (3).

8. Groupe électrogène selon l'une quelconque ou plusieurs des revendications précédentes, dans lequel est prévu pour la réduction du niveau de bruit un silencieux (13) pour le moteur à combustion interne (5) et le silencieux (13) est disposé à l'avant du groupe électrogène (1) et/ou à un endroit proche ou au-dessous d'une zone de pivotement du réservoir (7).

9. Groupe électrogène selon l'une quelconque ou plusieurs des revendications précédentes, dans lequel sont disposés dans la zone inférieure du cadre porteur (17) au moins galets de roulement (11).

10. Groupe électrogène selon l'une quelconque ou plusieurs des revendications précédentes, dans lequel une poignée (19) est disponible sur le cadre porteur (17).

11. Groupe électrogène selon la revendication 10, dans lequel la poignée (19) est reliée avec le cadre porteur de manière à ce qu'on puisse la faire pivoter autour d'un axe horizontal et le mouvement de pivotement soit effectué en un angle supérieur à 0° et inférieur ou égal à 180°.

12. Groupe électrogène selon l'une quelconque ou plusieurs des revendications précédentes, dans lequel le cadre porteur est formé comme construction à tringles (17).

13. Groupe électrogène selon l'une quelconque ou plusieurs des revendications précédentes, dans lequel existe une tôle de recouvrement (26) à l'arrière du groupe électrogène (1) ou dans une zone opposée au silencieux (13).
